(19) Europäisches Patentamt
European Patent Office
Office européen des brevets

(11) Publication number: 0 004 391 A1

# (12) EUROPEAN PATENT APPLICATION

(21) Application number: 79200060.6

(22) Date of filing: 02.02.79

(51) Int. Cl.[2]: B 32 B 27/12, C 08 F 214/06, C 08 F 230/02, D 06 N 3/06

(30) Priority: 20.03.78 US 888066

(43) Date of publication of application: 03.10.79 Bulletin 79/20

(84) Designated Contracting States: BE CH DE FR GB NL SE

(71) Applicant: STAUFFER CHEMICAL COMPANY, Westport Connecticut 06880 (US)

(72) Inventor: Goswami, Jagadish Chandra, 14 Capitol Court, New City New York 10956 (US)
Inventor: Parikh, Shridhar Vaikunthlal, 509 Brookgreen Court, Anderson South Carolina 29621 (US)

(74) Representative: Urbanus, H.M., Ir. et al, c/o Vereenigde Octrooibureaux Nieuwe Parklaan 107, NL-2587 BP 's-Gravenhage (NL)

## (54) Vinyl film/substrate laminate.

(57) The use of an internally plasticized vinyl chloride film and a fabric backing, preferably a nonflame retardant fabric backing, as the substrate in a vinyl film/substrate laminate yields a product having a lower rate of smoke generation when burned than is produced by a conventional laminate of an externally plasticized vinyl film and a fabric backing. The internally plasticized vinyl chloride resin used in the vinyl film of the laminate of this invention may be a copolymer comprising from about 50% to about 85%, by weight, vinyl chloride, from about 3% to about 47%, by weight, of a $C_6$–$C_{10}$ alkyl acrylate, and from about 47% to about 3%, by weight, of a bis(hydrocarbyl)vinylphosphonate. The vinyl film/substrate laminate of the present invention is useful as an upholstery product.

EP 0 004 391 A1

0004391



# VINYL FILM/SUBSTRATE LAMINATE

## Background of the Invention

### Field of the Invention

The present invention relates to a vinyl film/substrate laminate which is suitable for use as an upholstery material.

### Description of the Prior Art

"Coated fabrics", for example, vinyl film/substrate laminates, are well known commercial products and are useful in a number of end uses (e.g., see U.S. Patent No. 3,988,519 to F. L. Stoller). Laminates containing a flexible, externally plasticized film of vinyl chloride resin bonded to a substrate of a fabric backing are commonly used, for example, as upholstery material.

It is well known that the external plasticizers used in conventional vinyl film/substrate laminates contribute to the combustion of the vinyl film (J. M. Schwarcz, JFF/Fire Retardant Chemistry, Vol. 1, May 1974, pp. 78-95). Numerous attempts to reduce the flammability of polymers have been made (D. F. Lawson et al., JFF/Fire Retardant Chemistry, Vol. 2, August 1974, pp. 132-150), including the use of additives, fillers, surface treatment of the film, or structural modifications of the polymers themselves. In regard to coated fabrics containing a vinyl film bonded to a fabric backing, the following literature references touch upon the problem of the flammability of conventional vinyl film/substrate laminates: L. Holstejn, "Reduction of Flammability of PVC Paste-Coated

Polyamide Fabrics", Plast. Hmoty Kauc., 9, No. 5, May 1972, pp. 134-139; C. E. Hoke, "Compounding Flame Retardance into Plastics", SPE Journal, Vol. 29, May 1973, pp. 36-40; and N. J. Abbott, "The Flammability of Coated Apparel Fabrics", J. Coated Fabrics, Vol. 3 (October 1973), pp. 135-141. The Abbott publication stresses (at p. 136) that one cannot precisely predict the burning behavior of coated fabrics from a knowledge of the flammability of the component parts and (at p. 140) that there is a need for further investigation into the burning characteristics of coated fabrics.

## Summary of the Present Invention

The present invention is a vinyl film/substrate laminate which unexpectedly has reduced smoke generation characteristics as compared to conventional laminates containing externally plasticized vinyl film and a substrate of a fabric backing. The laminate of the present invention comprises a vinyl film containing an internally plasticized vinyl chloride resin and a fabric backing, preferably a non-flame retardant backing. The laminate of the present invention also exhibits less "fogging" due to the volatilization of ingredients in the vinyl film when heated as compared to laminates formed from films of externally plasticized polyvinyl chloride.

## Description of Preferred Embodiments of the Present Invention

The vinyl film which is used in the present invention comprises, as one new component, an internally plasticized vinyl chloride resin in association with suitable amounts of such conventional additives as heat and light stabilizers, ultraviolet stabilizers, pigments, fillers, dyes, fungicides, and the like. Generally, the resin will comprise from about 50% to about 90%, by weight of the film, with the film thickness ranging from about 0.15 mm. to about 0.50 mm.

One preferred internally plasticized vinyl chloride resin for use in the present invention is a copolymer of: (1) from about 50% to about 85%, by weight, vinyl chloride; (2) from about 3% to about 47%, by weight, of a $C_6$-$C_{10}$ alkyl acrylate; and (3) from about 47% to about 3%, by weight of a bis(hydrocarbyl)vinylphosphonate.

Representative $C_6$-$C_{10}$ alkyl acrylates which can be used in forming the internally plasticized resin which can be used in the laminate of the present invention include: n-hexyl acrylate, n-octyl acrylate, 2-ethylhexyl acrylate, and mixtures of the foregoing acrylates. The $C_8$-$C_{10}$ alkyl acrylates are preferred for use, especially those containing branched alkyl groups, for example, 2-ethylhexyl acrylate, since such branched alkyl groups give better physical properties (e.g., low temperature flexability and tensile strength) to the resulting film containing the copolymer.

The terminology "bis(hydrocarbyl)vinylphosphonate", as used in the present specification,is meant to encompass vinylphosphonates having the formula:

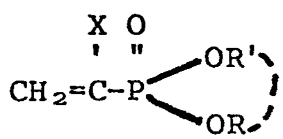

wherein X is selected from the group consisting of hydrogen, halogen, cyano, aryl, such as phenyl, $C_1$-$C_{18}$ alkyl and

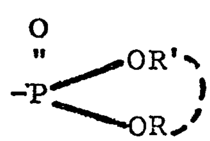

wherein R and R' are hydrocarbyl and substituted hydrocarbyl groups consisting essentially of hydrogen and carbon, and containing up to about 18 carbon atoms, inclusive, with the proviso that R and R' may be the same, different or conjoint, i.e., R and R' may combine to form one single radical.

The use, in this disclosure, of the expression "hydrocarbyl" and "substituted hydrocarbyl groups" in the definition of the suitable bis(hydrocarbyl)vinylphosphonates refers to the radicals obtained upon the removal of a hydrogen from a hydrocarbon or substituted hydrocarbon group which may be either an aliphatic or aromatic group. These hydrocarbyl groups may be substituted with any non-interferring groups, i.e., with any group which does not interfere with the polymerization of the bis(hydrocarbyl) vinylphosphonate. Such substituent groups include, for example, chloro, bromo, fluoro, nitro, hydroxy, sulfone, ethoxy, methoxy, nitrile, ether, ester, and ketone groups.

Illustrative of the aliphatic and aromatic groups as represented by R and R' in the above-described structure of the bis(hydrocarbyl)vinylphosphonate are alkyl groups, such as methyl, ethyl, propyl, butyl, pentyl, hexyl, nonyl, and the like; alkenyl groups, such as pentenyl and hexenyl, including all of their respective isomers; cycloalkyl groups, such as cyclopropyl, cyclobutyl, cyclopentyl, cyclohexyl, and the like; cycloalkenyl groups, such as cyclohexenyl, and the like; and aryl groups, such as, phenyl, benzyl, phenethyl, tolyl, naphthyl, and the like.

Representative of the above-defined bis(hydrocarbyl)vinylphosphonates are:

Bis(beta-chloroethyl)vinylphosphonate;
Bis(2-ethylhexyl)vinylphosphonate;
Bis(beta-chloropropyl)vinylphosphonate;
Bis(beta-chloroethyl) 1-methylvinylphosphonate;
Bis(beta-chloroethyl) 1-cyanovinylphosphonate;
Bis(beta-chloroethyl) 1-chlorovinylphosphonate;
Bis(beta-chloroethyl) 1-phenylvinylphosphonate;
Dimethyl vinylphosphonate
Diethyl vinylphosphonate;
Bis(omega-chlorobutyl)vinylphosphonate;

Di-n-butyl vinylphosphonate;

Di-isobutyl vinylphosphonate;

Bis(2-chloroisopropyl) 1-methylvinylphosphonate

Diphenyl vinylphosphonate; and

Bis(2,3-dibromopropyl)vinylphosphonate

From the above group of bis(hydrocarbyl)vinylphosphonate monomers, it is preferred to employ bis(beta-chloroethyl)vinylphosphonate in preparing the internally plasticized polymers used in the laminate of the present invention, since this monomer is a commercially available material and is lower in cost than any of the other bis-(hydrocarbyl)vinylphosphonates. Bis(2-ethylhexyl)vinylphosphonate is also a preferred monomer since it gives a vinyl film having good flexibility even at very low temperatures.

Compatible mixtures of the respective alkyl acrylates and of the vinylphosphonates can be used, if desired.

One preferred copolymer for use in the vinyl film in the present laminate, from the standpoint of cost and performance, is a terpolymer containing from about 55% to about 80%, by weight, vinyl chloride, from about 10% to about 35%, by weight, of the $C_6$-$C_{10}$ alkyl acrylate, and from about 5% to about 25%, by weight, of a bis($C_2$-$C_8$ haloalkyl)vinylphosphonate copolymerized therein. One terpolymer which can be used to form films having a Shore "A" hardness of from about 60 to about 75 contains from about 56% to about 58%, by weight, of vinyl chloride, from about 29% to about 31%, by weight, 2-ethylhexyl acrylate and from about 11% to about 13%, by weight, of the vinylphosphonate, e.g., of bis(beta-chloroethyl)vinylphosphonate or of bis(2-ethylhexyl)vinylphosphonate. For a harder film having a Shore "A" hardness of from about 80 to about 90, a higher vinyl chloride content is needed.

This is easily accomplished by raising the vinyl chloride monomer content and correspondingly reducing the acrylate and vinylphosphonate monomer content during the polymerization reaction. For example, a terpolymer having a Shore "A" hardness of from about 85 to about 95 can contain from about 73% to about 75%, by weight, vinyl chloride, from about 17% to about 19%, by weight, of the $C_6$-$C_{10}$ alkyl acrylate, e.g., 2-ethylhexyl acrylate, and from about 7% to about 9%, by weight of the bis(hydrocarbyl) vinylphosphonate, e.g., bis(beta-chloroethyl)vinylphosphonate.

The type of internally plasticized copolymer, described above, which is useful in the laminate of the present invention can be formed using conventional bulk, emulsion, suspension and solution polymerization procedures. Suspension polymerization is preferred since it avoids the problems of isolation of the product from the latex that is produced using emulsion polymerization techniques, the heat of reaction is more readily removed as compared to bulk polymerization procedures, and no solvent recovery is needed as in solution polymerization.

Suspension polymerization reaction mixtures comprise from about 20% to about 45%, by weight, based on the amount of water, of the above-enumerated monomers in an aqueous reaction medium. Also included are from about 0.05% to about 5%, by weight, based on the weight of monomers, of a suspending agent, such as methyl cellulose, hydroxypropyl methyl cellulose, gelatine, and the like; from about 0.005% to about 1%, by weight, based on the amount of monomer, of at least one monomer-soluble initiator, such as azobisisobutyronitrile, lauroyl peroxide, benzoyl peroxide or isopropyl peroxydicarbonate. The polymerization reaction is conducted by heating the reaction medium containing the above components to a temperature

sufficient to effect polymerization for a sufficient length of time, e.g., from about 35°C. to about 75°C. for about 12 hours, with agitation being applied throughout the course of the reaction. As is well known in the art, the use of the more active of the above mentioned initiators will require use of either a lower temperature or shorter reaction time, or both, whereas use of the less active initiators may require more vigorous reaction conditions. If desired, the molecular weight of the polymers can be regulated by adding an effective amount of a chain transfer agent during the polymerization. Generally from about 0.01 to about 0.1%, by weight of the monomers of the chain transfer agent can be added, if desired. Representative chain transfer agents include the chlorinated hydrocarbons, e.g., tetrachloroethane, trichloroethane and carbon tetrachloride, and mercaptans of the formula RSH, where R is an alkyl group, e.g., a $C_1$-$C_{12}$ alkyl group, such as butyl or dodecyl.

If emulsion polymerization is to be employed, the above described suspending agent is replaced with from about 0.2% to about 2%, by weight, of an emulsifying agent, such as sodium lauryl sulfate, potassium stearate, an alkyl benzene sulfonate, an ammonium dialkyl sulfosuccinate, and the like, and the monomer soluble initiator is replaced with from about 0.1% to about 1%, by weight, of a watersoluble initiator, such as an alkali metal persulfate, perborate or peracetate, ammonium persulfate, perborate or peracetate, the urea peroxides, hydrogen peroxide, tertiary butyl hydroperoxide, and the like. If desired, a redox initiator system, such as ammonium persulfate and sodium bisulfite or hydrogen peroxide and ascorbic acid, can also be used as the initiator. Polymerization is carried out at similar temperatures and over similar times as those used in suspension polymerization.

If bulk polymerization is employed, the monomers are polymerized in the presence of the above-described amounts of the monomer-soluble catalysts under the same temperature and time conditions described above in connection with suspension and emulsion polymerization.

If solution polymerization is employed, the monomers are polymerized in the presence of at least one inert organic solvent, such as butane, pentane, octane, benzene, toluene, cyclohexanone, acetone, isopropanol, tetrahydrofuran, or the like. The selected initiator should be soluble in the reaction medium. The copolymer can either remain dissolved in the solvent at the end of the polymerization or can be precipitated from the liquid phase during the polymerization. In the former case, the product can be recovered by evaporation of the solvent or by precipitation of the polymer solution by combining it with a non-solvent for the product. The same general reaction conditions used in suspension and emulsion polymerization can be used.

The type of internally plasticized copolymer described above is formed into a vinyl film for use in the laminate of this invention by being mixed with additives which are compatible with the copolymer product and which do not adversely affect the properties of said product. The main characteristics of the film used in the laminates of the present invention are their flexibility, low smoke generation and low fogging properties. Included within this class of additives are those heat and light stabilizers, ultraviolet stabilizers, pigments, fillers, dyes, fungicides, and other additives known to persons of ordinary skill in the art. A suitable listing which a person of ordinary skill in the art may use to select appropriate additives is given in Modern Plastics Encyclopedia, Vol. 51, No. 10A, e.g., at pp. 735-754.

The substrate forms another important aspect of the laminate of the present invention. It can be any woven or non-woven fabric backing used by persons of ordinary skill in the art. In a preferred embodiment of the present invention, a non-flame retardant backing is used since it contributes to a lower smoke generation rate than is produced by flame retardant backings formed of inherently flame retardant materials (such as modacrylic fibers) or formed of flammable materials that have been treated with an effective amount of one or more flame retardants. Generally, non-woven backings are preferred for the laminates of the present invention since they give the final laminate the desired degree of plushness. In general, a decrease in the porosity of the substrate and/or an increase in its bulk will favor a lower rate of smoke generation.

The type of non-woven fabric which is useful in the practice of the present invention can be made of drawn continuous filaments or staple. As is well known in the art, drawings of synthetic fibers, whether used as continuous filaments or staple, is necessary before the fibers possess sufficient strength for processing and use. If continuous filaments are used to produce the fabric, the filaments can be bonded together by some means, such as by fusing one or both sides of the batt used to produce the fabric.

A nonwoven batt of staple, however, can be bonded together simply by needling which results in a soft, strong, flexible nonwoven fabric. A nonwoven batt of staple also can be bonded by fusing the batt on one or both sides and/or by needling the batt to produce a nonwoven fabric suitable for use in the invention, but fusing the fabric of staple increases the stiffness and reduces the softness of the fabric. Thus, the unfused, needled,

nonwoven fabric of staple is generally preferred.

The production of a nonwoven fabric of staple or continuous filaments is well known in the art. One of the better known methods of producing a nonwoven fabric of staple employs the use of warp threads which help to maintain the integrity of the batt prior to and during the bonding step, such as needling. Another method for producing a nonwoven fabric of staple fibers employs a drafting zone to draw the batt in the warp direction prior to needling which eliminates the need for warp threads. The presence of warp threads in the batt sometimes is apparent from the film side of the laminate, and the laminate made with the warpless fabric generally is more desirable.

Synthetic fibers useful in the production of the nonwoven fabric vary widely. Some examples of suitable fibers include rayon, polyester, polypropylene, acrylonitrile, nylon, polyphenylene sulfide, and mixtures thereof. The denier of the fibers generally ranges from about 1 to about 20, although fibers with a denier in the range of from about 2 to about 15 are used more often. Suitable fabrics can be produced containing more than a single denier. "Denier" is defined as the weight in grams, of 9000 meters of synthetic fiber in the form of continuous filament.

As previously stated, the use of staple fibers rather than continuous filaments to form the nonwoven fabric is generally preferred. It has been shown that staple fibers having a length in the range of from about 5 to about 18 cm. produce a stronger laminate than shorter staple fibers. Generally, it has been found that staple fibers with a length in the range of from about 7.5 to about 16 cm. produces a very strong needled, unfused fabric. Generally, the weight of the nonwoven fabric is in the range of from about 27 to about 240

gm./$m^2$, but a better compromise of both cost and strength is a weight in the range of from about 68 to about 205 gm./$m^2$. If the fabric is too light, then the laminate will tear easily and possess poor grab strength; however, if the nonwoven fabric is too heavy or too stiff, then the laminate will have poor "hand" and less suppleness.

Another control on the characteristics of the fabric is the density of the nonwoven fabric. Although density and weight of the nonwoven fabric are directly related for a given thickness of a given nonwoven fabric, both of the parameters are usually identified in describing the fabric. The density of the nonwoven fabric will generally be in the range of from about 50 to about 320 kg./$m^3$, but again, a better compromise between cost and strength is a density in the range of from about 50 to about 225 gm./$m^3$.

As a general rule, the laminates of the invention comprise in the range of from about 50 to about 90%, by weight, of the film. It has been found that laminates comprising less than about 50%, by weight, of the vinyl film or more than about 90%, by weight, vinyl film suffer in one or more properties. For example, below 50 wt. % of film , the pliability and the abrasion resistance among others would be adversely affected. Above 90 wt. % of film, the plushness of the product would be adversely affected.

The laminates of the invention are manufactured by employing one of a number of well-known processes, such as direct calender lamination, post lamination and transfer coating. Direct calender lamination produces a very good laminate without the use of adhesives. The polymeric film acts as the adhesive because it is contacted with the fabric backing shortly after calendering and thus while the film is still hot and sticky.

Post lamination is another well developed method and differs from the direct calender lamination technique in that the polymeric film is not usually calendered just prior to the bonding step,and an adhesive is applied to the polymeric film before the film is contacted with the fabric backing. A roll of polymeric film is generally the source of the film, and a thin layer of adhesive is applied to the side of the film which is to be bonded to the fabric. The adhesive is applied by a suitable means,usually in an amount in the range of from about 34 to about 170 gm./$m^2$ depending upon the adhesive. The coated film then is contacted with the fabric backing, thereby producing a good, strong, leather-like final product.

Adhesive suitable for use in the post lamination techniques are well known in the art. Plastisols are one of the best known materials. These are dispersions of finely divided polymeric materials in nonvolatile organic liquids and low melting solids, generally referred to as plasticizers. Suitable plasticizers include phthalate, adipate and sebaccate esters and polyols such as ethylene glycol and its derivatives. A typical plastisol composition is 100 parts polymeric material, e.g., polyvinyl chloride, and 50 parts plasticizer, forming a paste which gels when heated to about 149°C. as a result of solvation of the resin particles by the plasticizer. If a volatile solvent is included in the plastisol, then the adhesive generally is referred to as an organosol which also is suitable for use in the invention.

The transfer coating method is most often used when a blowing agent is incorporated into the polymeric film thereby ultimately producing an expanded laminate. In some instances it has been found that the temperature which decompose the blowing agent may be too high for use of some of the materials otherwise useful in the

invention to produce the fabric. For example, a nonwoven fabric of polypropylene staple may shrink excessively at temperatures normally required to activate a blowing agent in a film of polyvinyl chloride.

The following Examples illustrate certain preferred embodiments of the present invention.

EXAMPLE 1

This Example illustrates the procedure used to make one of the internally plasticized resins which were employed in making some of the vinyl films in the laminate of the present invention. The internally plasticized resin of this Example was formed from a monomer mixture of about 60%, by weight, vinyl chloride, about 28%, by weight, of 2-ethylhexyl acrylate, and about 12%, by weight, of bis(beta-chloroethyl)vinylphosphonate. The acrylate and vinylphosphonate content of the final terpolymer were about 27.4%, by weight, and about 9.2%, by weight, respectively, with the remainder being vinyl chloride. The relative viscosity of the terpolymer was about 2.9 when measured as a 1%, by weight, solution of the terpolymer in cyclohexanone at 25°C.

The following ingredients were used in forming the polymerization reaction medium with all amounts given in parts by weight:

| Ingredient | Amount |
|---|---|
| Vinyl chloride monomer | 100 |
| 2-ethylhexyl acrylate | 46.5 |
| Bis(beta-chloroethyl)vinylphosphonate | 19.95 |
| Methylcellulose suspending agent ("Methocel" 1242 from The Dow Chemical Co.) | 0.23 |
| 20 wt. % isopropylperoxydicarbonate in heptane | 0.54 |
| Deionized water | 423 |

The following procedure was used to polymerize the vinyl chloride, acrylate and vinylphosphonate monomers:

1. The suspending agent was dissolved in a portion of the deionized water and was charged into the reactor along with the remainder of the water. The mixture was stirred briefly, and the peroxydicarbonate/heptane initiator mixture was added;

2. The acrylate and vinylphosphonate monomers where then added;

3. The reactor was closed, vacuum was applied (approx. 584 to 635 mm. of Hg. pressure) for 10 minutes to remove air from the reactor, and the vinyl chloride monomer vapor was added to break the vacuum. This operation was repeated once and the vinyl chloride was charged into the reactor;

4. The agitator was set at 496 revolutions per minute, and the reactor was heated to 50°C. until the pressure in the reactor dropped 4.2 kg./$cm^2$ from the maximum pressure noted near the beginning of the reaction;

5. The reactor was vented and was sparged with nitrogen at a rate of 70.7 cubic cm./sec. for a 44 liter reactor for a period of 1 hour to remove residual monomer from the product;

6. The reactor was allowed to cool and the

polymer particles were recovered by centrifuging. The particles were dried in a fluid bed drier using air at 30°C.; and

7. The dried polymer was milled through a Fitz mill and was sieved through a 30 mesh screen.

EXAMPLE 2

This Example illustrates another process which was used to form another internally plasticized terpolymer for use in making the vinyl film in the laminate of the present invention. This terpolymer was formed from a feed composition of about 76%, by weight, vinyl chloride, 17.3%, by weight, 2-ethylhexyl acrylate, and about 6.7%, by weight, bis(beta-chloroethyl)vinylphosphonate. The final terpolymer contained about 18.2%, by weight, 2-ethylhexyl acrylate and about 8.2%, by weight, bis(beta-chloroethyl)vinylphosphonate, with the remainder being vinyl chloride. The relative viscosity of the terpolymer was 2.72 when measured at 25°C. as a 1%, by weight, solution in cyclohexanone.

The following ingredients were used to make the polymerization reaction medium:

| Ingredient | Amount |
|---|---|
| Vinyl chloride monomer | 23.06 kg. |
| 2-ethylhexyl acrylate | 5.24 kg. |
| Bis(beta-chloroethyl)vinyl phosphonate | 2.15 kg. |
| Methylcellulose suspending agent ("Methocel" 1242 from The Dow Chemical Co.) | 30 grams |
| 20 wt. % isopropylperoxydicarbonate in heptane | 85 grams |
| Deionized water | 74.85 kg. |

The following procedure was used to polymerize the vinyl chloride, acrylate and vinylphosphonate monomers:

1. The suspending agent was dissolved in a portion of the deionized water and was charged into the reactor along with the remainder of the deionized water. The mixture was stirred briefly and the peroxydicarbonate/heptane initiator mixture was added;

2. The acrylate and vinylphosphonate monomers were then added;

3. The reactor was closed, vacuum was applied (approx. 584.2 to 635 mm. of Hg pressure) for 10 minutes to remove air from the reactor, and vinyl chloride monomer vapor was added to break the vacuum. This operation was repeated once and the vinyl chloride monomer was charged into the reactor;

4. The agitator was set at 351 revolutions per minute, and the reactor was heated to 50°C. until the pressure in the reactor dropped 4.2 kg./cm.$^2$ from the maximum pressure noted near the beginning of the reaction;

5. The reactor was vented and sparged with nitrogen at a rate of 70.7 cubic cm./sec. for a 44 liter reactor for a period of 1 hour to remove residual monomer from the product;

6. The reactor was allowed to cool, and the polymer particles were recovered by centrifuging. The particles were dried in a fluid bed drier using air at 30°C.; and

7. The dried polymer was milled through a Fitz mill and was sieved through a 30 mesh screen.

EXAMPLE 3

This Example illustrates the process for making a conventional externally plasticized vinyl film which was tested as a control against the laminates of the present invention.

The following ingredients were mixed together in

a 2-roll mill at about 162.8 to 165.6°C. until homogeneous:

| Ingredient | Amount by Weight |
|---|---|
| Polyvinyl chloride resin ("SCC-686" from Stauffer Chemical Company) | 43.36 |
| Calcium carbonate filler | 12.56 |
| Ba-Cd-Zn liquid heat stabilizer ("Mark M/PL" from Argus Chemical) | 1.30 |
| Normal alkyl phthalate plasticizer | 26.49 |
| Epoxidized soya oil | 1.30 |
| Silica drying agent | 0.43 |
| Antimony oxide flame retardant | 4.56 |
| Coloring (approx. 60 wt. % pigment in 40 wt. % plasticizer) | 10.0 |

The formulation was withdrawn from the mill as a 0.38 mm. film.

EXAMPLE 4

This Example illustrates formation of a 0.38 mm. vinyl film from the internally plasticized terpolymer of Example 1. The ingredients were adjusted to yield a film having similar physical properties as exhibited by the film of Example 3. The same processing conditions employed in Example 3 were used:

| Ingredients | Amount by weight |
|---|---|
| Resin from Example 1 | 62 |
| Epoxy octyl tallate heat stabilizer ("Drapex 4-4" from Argus Chemical Company) | 3.15 |
| Tin mercaptide heat stabilizer ("T-31" from M&T Chemicals) | 2.5 |
| Calcium carbonate filler | 20 |
| Silica drying agent | 0.62 |
| Partially oxidized polyethylene lubricant | 1.55 |
| Bis stearamide lubricant | 0.62 |
| Antimony oxide flame retardant | 4.56 |
| Coloring (from Example 3) | 5.00 |

EXAMPLE 5

This Example illustrates a differing vinyl film from that produced in Example 4 which is useful in the laminates of the present invention. The same procedures used in Examples 3-4 were used in this Example:

| Ingredients | Amount by Weight |
| --- | --- |
| Resin from Example 1 | 60.0 |
| Polyvinyl chloride resin ("SCC-40" from Stauffer Chemical Company) | 2.0 |
| Zn heat stabilizer ("Synpron 1402" from Synthetic Products Co.) | 1.86 |
| Ba-Cd heat stabilizer ("Synpron J-86" from Synthetic Products Co.) | 0.62 |
| Epoxy octyl tallate heat stabilizer ("Drapex 4-4") | 3.73 |
| Calcium carbonate filler | 20.0 |
| Partially oxidized polyethylene lubricant | 1.55 |
| Bis stearamide lubricant | 0.62 |
| Antimony oxide flame retardant | 4.00 |
| Silica drying agent | 0.62 |
| Coloring (from Example 3) | 5.00 |

EXAMPLE 6

This Example illustrates another vinyl film formulation in accordance with the present invention made in accordance with the processes of Examples 3-5:

| Ingredient | Amount by Weight |
|---|---|
| Resin of Example 1 | 50.0 |
| Chlorinated polyethylene (42% chlorine) | 12.0 |
| Epoxy octyl tallate heat stabilizer ("Drapex 4-4") | 3.1 |
| Zn heat stabilizer ("Synpron 1402") | 1.86 |
| Ba-Cd heat stabilizer ("Synpron J-86") | 0.61 |
| Calcium carbonate filler | 20.1 |
| Silica drying agent | 0.61 |
| Partially oxidized polyethylene lubricant | 1.55 |
| Bis stearamide lubricant | 0.61 |
| Antimony oxide flame retardant | 4.56 |
| Coloring (from Example 3) | 5.0 |

EXAMPLE 7

This Example illustrates another vinyl film formulation in accordance with the present invention made with the processes of Examples 3-6:

| Ingredient | Amount by Weight |
|---|---|
| Resin of Example 2 | 58.7 |
| Epoxy octyl tallate heat stabilizer ("Drapex 4-4") | 6.6 |
| Zn heat stabilizer ("Synpron 1402") | 1.8 |
| Ba-Cd heat stabilizer ("Synpron J-86") | 0.6 |
| Partially oxidized poly ethylene lubricant | 1.55 |
| Bis stearamide lubricant | 0.6 |
| Calcium carbonate filler | 15.75 |
| Antimony oxide flame retardant | 4.7 |
| Silica drying agent | 0.6 |
| Powdered butadiene-acrylonitrile rubber flexibilizing agent | 4.1 |
| Coloring (from Example 3) | 5.0 |

## EXAMPLE 8

This Example illustrates another vinyl film formulation in accordance with the present invention made with the processes of Examples 3-7:

| Ingredient | Amount by Weight |
| --- | --- |
| Resin of Example 2 | 58.7 |
| Epoxy octyl tallate heat stabilizer ("Drapex 4-4") | 6.6 |
| Zn heat stabilizer ("Synpron 1402") | 1.8 |
| Ba-Cd heat stabilizer ("Synpron J-86") | 0.6 |
| Partially oxidized polyethylene lubricant | 1.55 |
| Bis stearamide lubricant | 0.6 |
| Calcium carbonate filler | 17.35 |
| Antimony oxide flame retardant | 4.7 |
| Silica drying agent | 0.6 |
| Coloring (from Example 3) | 7.5 |

EXAMPLE 9

This Example illustrates another vinyl film formulation in accordance with the present invention made with the processes of Examples 4-8:

| Ingredient | Amount by Weight |
|---|---|
| Resin from Example 1 | 60.0 |
| Polyvinyl chloride ("SCC-40" from Stauffer Chemical Company) | 2.0 |
| Zn heat stabilizer ("Synpron 1402") | 1.86 |
| Ba-Cd heat stabilizer ("Synpron J-86") | 0.63 |
| Epoxy octyl tallate heat stabilizer ("Drapex 4-4") | 4.65 |
| Calcium carbonate filler | 19.05 |
| Partially oxidized polyethylene lubricant | 1.55 |
| Bis stearamide lubricant | 0.63 |
| Antimony oxide | 4.00 |
| Silica drying agent | 0.63 |
| Coloring (from Example 3) | 5.00 |

EXAMPLE 10

The vinyl films made in Examples 3-9 were then formed into a series of laminates using the method and other components (backing and adhesive) described in this Example.

ADHESIVES

Two types of adhesives were used in forming the laminates that were tested in Examples 11 and 12, which follow. The ingredients listed below were mixed together to make a fire retardant ("FR") adhesive and a non-fire retardant ("non-FR") adhesive:

FR ADHESIVE

| Ingredient | Percent by Weight |
|---|---|
| Normal alkyl phthalate plasticizer | 38.00 |
| Polyvinyl chloride dispersion resin ("SCC-40" from Stauffer Chemical Company) | 44.65 |
| Epoxidized soya oil | 2.10 |
| Fungicide | 1.25 |
| 8-12% Ground antimony trioxide/ 92% - 88% Plasticizer Blend | 14.00 |

NON-FR ADHESIVE

| Ingredient | Percent by Weight |
|---|---|
| Normal alkyl phthalate plasticizer | 43.20 |
| Polyvinyl chloride dispersion resin | 52.80 |
| Epoxidized soya oil | 2.50 |
| Fungicide | 1.50 |

BACKINGS

Two different non-woven backings were used in forming the laminates that were tested in Examples 11 and 12, which follow. They comprised staple fibers which had been needle punched into a thin layer of polyurethane foam. Their physical properties are set forth below:

| | Fire Retardant Backing | Non-Fire Retardant Backing |
|---|---|---|
| Weight of Backing: | 129-136 gm./$m^2$ | 129-163 gm./$m^2$ |
| % Composition of Backing | 50% - 8 Den; 7.62 cm.<br>50% - 3 Den; 7.62 cm. | 60% - 3 Den; 10.16 cm.<br>20% - 6 Den; 15.24 cm.<br>20% - 6 Den; 7.62 cm. |
| Density of Backing: | 48.1 kg/$m^3$ | 48.1 kg/$m^3$ |
| Foam Weight: | 20.36 gm./$m^2$ | 20.36 gm./$m^2$ |
| Thickness of Backing | 2.41 - 2.67mm. | 2.29 - 3.30 mm. |

TOPCOATS

The vinyl films were also topcoated to a thickness of about 5.08 microns with the following topcoat so as not to be tacky when embossed with a decorative grain pattern:

| Ingredient | Percent by Weight |
|---|---|
| PVC resin (12 wt. %)in methyl ethyl ketone (88 wt. %) | 66.67 |
| 25 wt. % acrylic processing acid ("Acryloid 30") and 75 wt. % methyl ethyl ketone solvent | 11.67 |
| Methyl ethyl ketone | 21.66 |

The various test laminates were then formed by the following procedure.

The various films were then coated with either the flame retardant adhesive or the non-flame retardant adhesive described earlier, as indicated in the following Tables in Examples 11 and 12. The amount of non-flame retardant adhesive which was added on each film was in the range of from about 20.4 to about 72.5 $gm./m^2$.

The selected backing (as indicated in the Tables in Examples 11 and 12) were hand laid on top of the adhesive and were laminated in a standard laminator to form the laminate of film, adhesive and backing.

The thus prepared laminates were ready for testing in regard to their smoke generation and fire retardant properties.

EXAMPLE 11

The laminates that were made in Example 10 were tested for their smoke generation characteristics in the NBS smoke chamber (see D. Gross, J. J. Loftus and A. F. Robertson, ASTM Special Technical Publication 422, pp. 166-204, 1969). This chamber contains a radiant heater producing 2.5 $W/cm^2$ of heat at the surface of a 7.62 cm.

x 7.62 cm. sample, a propane-air pilot burner and a vertical beam of light with a photomultiplier tube detector and microphotometer to record the attenuation of light by smoke developing in the chamber. During smoke testing, the chamber is sealed to enclose the combustion products and smoke. The Tables which follow give the results that were obtained.

Table 1 gives the smoke data under flaming conditions for a series of laminates comprising vinyl film, a fire retardant backing, and a non-flame retardant adhesive.

Table 2 gives the smoke data under flaming conditions for a series of laminates comprising vinyl film, a non-fire retardant backing, and a flame retardant adhesive.

Table 3 gives the smoke data under smoldering conditions for a series of laminates comprising vinyl film, a non-fire retardant adhesive and a fire retardant backing.

Table 4 gives the smoke data under smoldering conditions for a series of laminates comprising vinyl film, a fire retardant adhesive, and a non-fire retardant backing.

Table 5 gives the smoke density after 4 minutes under both smoldering and flaming conditions and the average of these values for a laminate comprising a vinyl film, a non-fire retardant adhesive, and a fire retardant backing.

The vinyl films in each of the above laminates is selected from one of Examples 3-9, whereas the selected adhesive and backing are described in Example 10 along with a description of how the laminates were formed.

TABLE 1

NBS SMOKE DATA: FLAMING CONDITIONS
(Non-FR Adhesive/FR Backing)

| Vinyl Film | Dm/gm[1] | % Red.[2] | Dm/gm of material burned | % Red. |
|---|---|---|---|---|
| Example 3 (control) | 50 | -- | 97 | -- |
| Example 4 | 39 | 22 | 72 | 26 |
| Example 5 | 42 | 16 | 84 | 13 |
| Example 6 | 42 | 16 | 86 | 11 |
| Example 7 | 51 | None | 93 | 4 |
| Example 8 | 54 | None | 93 | 4 |
| Example 9 | 44 | 12 | 83 | 14 |

1) "Dm/gm" in this and later Tables represents the value for maximum smoke generated per weight of the entire sample. "Dm" is the maximum specific optical density and gives a measure of the smoke buildup during the test. Lower numbers are desired as indicating less smoke: "Dm" = 25, light smoke; 25-74, moderate smoke; 100-400, dense smoke; 400 very dense smoke.

2) The percent reduction in this and later Tables is based upon the values obtained for the control laminate of Example 3.

TABLE 2

NBS SMOKE DATA: FLAMING CONDITIONS
(FR Adhesive/Non-FR Backing)

| Vinyl Film | Dm/gm | % Red. | Dm/gm of material burned | % Red. |
|---|---|---|---|---|
| Example 3 (control) | 77 | -- | 142 | -- |
| Example 4 | 35 | 55 | 65 | 54 |
| Example 5 | 36 | 53 | 68 | 52 |
| Example 6 | 33 | 57 | 65 | 54 |
| Example 7 | 48 | 37 | 80 | 44 |
| Example 8 | 45 | 42 | 70 | 51 |
| Example 9 | 36 | 53 | 68 | 52 |

TABLE 3

NBS SMOKE DATA: SMOLDERING CONDITIONS
(Non-FR Adhesive/FR Backing)

| Vinyl Film | Dm/gm | % Red. | Dm/gm of material burned | % Red. |
|---|---|---|---|---|
| Example 3 (control) | 77 | -- | 156 | -- |
| Example 4 | 38 | 51 | 74 | 53 |
| Example 5 | 34 | 56 | 69 | 56 |
| Example 6 | 35 | 55 | 76 | 51 |
| Example 7 | 54 | 30 | 103 | 40 |
| Example 8 | 51 | 34 | 104 | 33 |
| Example 9 | 36 | 53 | 78 | 50 |

TABLE 4

NBS SMOKE DATA: SMOLDERING CONDITIONS
(FR Adhesive/Non-FR Backing)

| Vinyl Film | Dm/gm | % Red. | Dm/gm of material burned | % Red. |
|---|---|---|---|---|
| Example 3 (control) | 69 | -- | 153 | -- |
| Example 4 | 28 | 59 | 59 | 61 |
| Example 5 | 22 | 68 | 54 | 65 |
| Example 6 | 20 | 71 | 55 | 64 |
| Example 7 | 40 | 42 | 88 | 42 |
| Example 8 | 37 | 46 | 88 | 42 |
| Example 9 | 26 | 62 | 58 | 62 |

TABLE 5

NBS SMOKE DENSITY ($D_S$) AFTER 4 MINUTES
(Non-FR Adhesive/FR Backing)

| Vinyl Film | Ds Smoldering | Ds Flaming | Ds Average |
|---|---|---|---|
| Example 3 (control) | 246 | 245 | 246 |
| Example 4 | 84 | 178 | 131 |
| Example 5 | 85 | 166 | 126 |
| Example 6 | 112 | 177 | 145 |
| Example 7 | 145 | 197 | 171 |
| Example 8 | 126 | 198 | 162 |
| Example 9 | 90 | 179 | 135 |

TABLE 6

NBS SMOKE DENSITY ($D_S$) AFTER 4 MINUTES
(FR Adhesive/Non-FR Backing)

| Vinyl Film | Ds Smoldering | Ds Flaming | Ds Average |
|---|---|---|---|
| Example 3 (control) | 194 | 328 | 261 |
| Example 4 | 72 | 156 | 114 |
| Example 5 | 57 | 155 | 106 |
| Example 6 | 61 | 131 | 96 |
| Example 7 | 101 | 180 | 140 |
| Example 8 | 119 | 173 | 146 |
| Example 9 | 70 | 138 | 99 |

The data that is shown in Tables 1-6 indicate the following general trends:

1. For those vinyl films contaning the conventional externally plasticized vinyl chloride resin, the substitution of a non-flame retardant backing for a flame retardant one shows essentially no change in the smoke generation characteristics of the product in the smoldering mode (Compare Example No. 3 in Tables 3 and 4, respectively). In the flaming mode, the presence of the flame retardant backing gives lower smoke generation (Compare Example No. 3 in Tables 1 and 2, respectively);

and

2. In vinyl films containing the internally plasticized resin, the non-flame retardant backing unexpectedly gives lower smoke generation in both the smoldering and flaming modes with the greatest degree of improvement in the latter mode (Example Nos. 4-9 in Tables 1-4). The use of a flame retardant backing, however, does result in a degree of reduction in the smoke generation of the laminate of the present invention, as compared to a control laminate containing an externally plasticized resin and a flame retardant backing.

EXAMPLE 12

The laminates that were made in Example 10 were also tested for flame retardancy using the Boston Fire Test and the vertical flame resistance test (Fed. Test. Method Std. No. 5903).

The Boston Fire test suspends the sample (25.4 cm. x 3.81 cm.) in a vertical position above a burner flame having a blue core of about 3.81 cm. and a total flame height of about 15.24 cm. The flame is applied for 10 seconds and withdrawn. The after flame time (in seconds) is measured after the flame is withdrawn. If any portion of the sample burns for more than 2 seconds after the flame is withdrawn, this constitutes failure.

The vertical flame resistance test also suspends a 7.0 cm. x 30.5 cm. sample vertically in a holder in a test cabinet. The entire length of the sample is exposed and the lower end is 19 mm. above the top of the gas burner. The burner flame is applied vertically at the middle of the lower edge of the sample for 12 seconds, and the burner is turned off. The after flame time (in seconds) is the time the specimen continues to flame after the burner flame is shut off. The average char length (in in.) is the distance from the end of the specimen to the end of a lengthwise tear of the sample

through the center of the charred area by application of a weight and hook of defined weight in the charred area as defined in Secs. 5.8 - 5.10 of Federal Test Method Standard No. 5903. Lower values are more desirable.

Table 7, which follows, gives the fire retardancy data for a series of laminates comprising vinyl film, a non-fire retardant adhesive, and a fire retardant backing.

Table 8 gives the fire retardancy data for a series of laminates comprising vinyl film, a fire retardant adhesive, and a non-fire retardant backing.

TABLE 7

FIRE RETARDANCY DATA
(Non-FR Adhesive/FR Backing)

| | Boston | Vert. Flame Resist. Test | |
|---|---|---|---|
| Vinyl Film | After Flame Time (sec.) | Char Length (cm.) | After Flame (sec.) |
| Example 3 (control) | 0 | 5.6 | 0 |
| Example 4 | 0 | 5.3 | 0 |
| Example 5 | 0 | 6.4 | 5 |
| Example 6 | 0 | 4.8 | 0 |
| Example 7 | 0 | 5.8 | 0 |
| Example 8 | 0 | 5.8 | 12 |
| Example 9 | 0 | 6.6 | 0 |

TABLE 8

FIRE RETARDANCY DATA
(FR Adhesive/Non-FR Backing)

| Vinyl Film | Boston After Flame Time (sec.) | Vert. Flame Resist. Test Char Length (cm.) | Vert. Flame Resist. Test After Flame (sec.) |
|---|---|---|---|
| Example 3 (control) | 0 | 8.1 | 14 |
| Example 4 | 0 | 8.4 | 17 |
| Example 5 | 0 | 12.2 | 31 |
| Example 6 | 0 | 5.3 | 0 |
| Example 7 | 0 | 5.1 | 0 |
| Example 8 | 0 | 4.6 | 0 |
| Example 9 | 0 | 6.6 | 12 |

EXAMPLE 13

This Example illustrates the low fogging characteristics of laminates containing the vinyl film to be used in the laminates of the present invention (e.g., the film from Example 4) and a laminate containing a conventional film comprising externally plasticized polyvinyl chloride (e.g., the film from Example 3). The laminate samples were each subjected to a conventional fog test wherein they were placed in a circulating oven for 6 hours at 87.8°C. adjacent a clean glass collection plate at 37.8°C. As volatile components boiled off from the film, they were collected on the cooler glass plate. Both plates were then read for light transmission using a light meter which was calibrated in foot candles. A higher reading indicates more light transmission which is caused by a lower deposit of material on the collection plate. The laminate of the present invention had a more desirable reading of 88 as compared to the reading of 67 for a laminate containing the conventional externally plasticized film.

The previously presented Examples illustrate certain preferred embodiments of the present invention and should not be construed in a limiting sense. The claims which follow set forth the scope of protection that is desired.

CLAIMS

1. In a vinyl/fabric backing laminate comprising a vinyl film attached to a fabric backing, wherein the improvement comprises an internally plasticized vinyl chloride copolymer in said vinyl film.

2. A laminate as claimed in Claim 1 wherein the internally plasticized vinyl chloride copolymer comprises from about 50% to about 85%, by weight, vinyl chloride, from about 3% to about 47%, by weight of a $C_6$-$C_{10}$ alkyl acrylate and from about 47% to about 3%, by weight, of a bis(hydrocarbyl)vinylphosphonate.

3. A laminate as claimed in Claim 2 wherein the vinyl chloride comprises from about 55% to about 80%, by weight, the acrylate comprises from about 10% to about 35%, by weight, and the vinylphosphonate comprises from about 5% to about 25%, by weight.

4. A laminate as claimed in Claim 3 wherein the acrylate is 2-ethylhexyl acrylate.

5. A laminate as claimed in Claim 3 wherein the vinylphosphonate is bis(beta-chloroethyl)vinylphosphonate.

6. A laminate as claimed in Claim 1 wherein the backing is a non-flame retardant backing.

7. A laminate as claimed in Claim 1 ,2 or 3, wherein the backing is a non-woven backing.

8. A laminate as claimed in Claim 1, 2 or 3, wherein the backing is a non-woven polyester backing.

0004391

9. A laminate as claimed in Claim 3 wherein the acrylate is 2-ethylhexyl acrylate, the vinyl phosphonate is bis(beta-chloroethyl)vinylphosphonate, and the backing is non-woven polyester backing.

European Patent Office

# EUROPEAN SEARCH REPORT

0004391

Application number

EP 79 20 0050

## DOCUMENTS CONSIDERED TO BE RELEVANT

| Category | Citation of document with indication, where appropriate, of relevant passages | Relevant to claim |
|---|---|---|
| | FR - A - 2 192 562 (STAUFFER CHEM.)<br>* Claims 1-7,15; page 5, line 22; page 8, lines 16-31 *<br>-- | 1-5,7-9 |
| A | GB - A - 1 467 340 (STAUFFER CHEM.)<br>* Claims 1,5,8; page 4, lines 71-93; page 5, lines 128 - page 6, line 12; page 7; lines 18-37 *<br>-- | 2-6 |
| A | US - A - 3 948 842 (P. KRAFT)<br>* Column 2, line 29 - column 4, line 65; column 5, line 66 - column 6, line 16; column 8, lines 1-26; column 12, lines 8-41 *<br>-- | 2-6 |
| A | FR - A - 2 322 894 (STAUFFER CHEM.)<br>* Claims 1-5,7 *<br>-- | 2-4,6 |
| A | GB - A - 953 376 (HOECHST)<br>* Claims 1,10,19,23; page 3, lines 22-42; examples 4-6 *<br>-- | 2,3,5,6 |
| A,D | US - A - 3 988 519 (F.L. STOLLER)<br>* Claims 1,3,4 *<br>-- | 1,6-8 |
| P,A | FR - A - 2 378 805 (STAUFFER CHEM.)<br>* Claims 1-10; examples 1,2 *<br>---- | 2-6 |

CLASSIFICATION OF THE APPLICATION (Int. Cl.²)

B 32 B 27/10
C 08 F 214/06
C 08 F 230/02
D 06 N 3/06

TECHNICAL FIELDS SEARCHED (Int.Cl.²)

B 32 B
C 08 F 214/06
230/02

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 20-06-1979 | BLASBAND |